(19) Europäisches Patentamt / European Patent Office / Office européen des brevets

(11) **EP 1 860 144 B1**

(12) **EUROPEAN PATENT SPECIFICATION**

(45) Date of publication and mention
of the grant of the patent:
**18.09.2013 Bulletin 2013/38**

(51) Int Cl.:
**C08K 3/22** *(2006.01)* **C08K 3/36** *(2006.01)*

(21) Application number: **07010334.6**

(22) Date of filing: **24.05.2007**

(54) **Resin pulley**

Harzriemenscheibe

Poulie en résine

(84) Designated Contracting States:
**DE FR**

(30) Priority: **24.05.2006 JP 2006144475**

(43) Date of publication of application:
**28.11.2007 Bulletin 2007/48**

(73) Proprietor: **JTEKT Corporation**
**Osaka-shi**
**Osaka 542-8502 (JP)**

(72) Inventors:
• **Tsuda, Takeshi**
**Osaka-shi**
**Osaka 542-8502 (JP)**
• **Arai, Hirokazu**
**Osaka-shi**
**Osaka 542-8502 (JP)**

(74) Representative: **Steil, Christian et al**
**Witte, Weller & Partner**
**Postfach 10 54 62**
**70047 Stuttgart (DE)**

(56) References cited:
**EP-A1- 1 602 860**

• **DATABASE WPI Week 200576 Derwent Publications Ltd., London, GB; AN 2005-737887 XP002444180 & JP 2005 282685 A (KOYO SEIKO CO LTD) 13 October 2005 (2005-10-13)**
• **DATABASE WPI Week 199020 Derwent Publications Ltd., London, GB; AN 1990-150308 XP002444181 & JP 02 092628 A (SHIN KOBE ELECTRIC MACHINERY) 3 April 1990 (1990-04-03)**
• **DATABASE WPI Week 200670 Derwent Publications Ltd., London, GB; AN 2006-672381 XP002444239 & JP 2006 226404 A (KOYO SEIKO CO LTD) 31 August 2006 (2006-08-31)**
• **DATABASE WPI Week 198919 Derwent Publications Ltd., London, GB; AN 1989-142165 XP002444182 & JP 01 087967 A (SHIN KOBE ELECTRIC MACHINERY) 3 April 1989 (1989-04-03)**

Remarks:
The file contains technical information submitted after the application was filed and not included in this specification

**Description**

Technical Field

The present invention relates to a resin pulley used for engine parts for automobiles and the like.

Description of the Related Art

Conventionally, a metal pulley has generally been used for engine parts for automobiles and the like. However, a resin pulley reinforced by a reinforcing fiber such as a glass fiber has progressively replaced metal pulleys with recent demands for size reduction, weight reduction and cost reduction.

Furthermore, in view of improving dimensional stability and strength of the resin pulley, a novolac- type phenolic resin known for moldability of hardened products superior in these properties, particularly a resol- type phenolic resin made by reacting phenol with formaldehyde in the presence of a basic catalyst or excessive formaldehyde is mainly used as a base resin constituting the resin pulley. This is disclosed in Japanese Unexamined Patent Publications No. JP 2002- 212388 A and No. JP 2004- 92688 A, for example.

Hardened products of the resol-type phenolic resin are not only superior in dimensional stability and strength but also have high flexibility and thermal shock resistance compared with hardened products of the novolac-type phenolic resin which is made by reacting phenol with formaldehyde in the presence of an acid catalyst. Therefore, the hardened resol-type phenolic resin has advantages of improving thermal shock resistance, in particular, of a resin pulley with a metal insertion member and being capable of preventing the generation of cracks.

Resin pulleys composed of hardened products of the resol-type phenolic resin reinforced by a reinforcing fiber such as a glass fiber have achieved sufficient properties as alternatives of metal pulleys in terms of dimensional stability and strength. However, the resol-type phenolic resin is self-reactive and needs to be stored at a low temperature of about 5°C or lower in order to prevent the resin from hardening by self-reaction. Moreover, since the hardening reaction continues slowly even under cold storage and an estimated period of service is limited, various problems described below are caused:

(a) It is necessary to set up a cold storage facility for storing the resol-type phenolic resin in a manufacturing plant for resin pulleys. Besides the need for its space and materials, power consumption of energy such as electric power required for operating the manufacturing plant will be increased;
(b) It can be assumed that a resin composition containing the resol-type phenolic resin as a base resin and constituting the resin pulley is produced at another place other than the manufacturing plant for resin pulleys and transported to the plant. In this case, the resin composition must be kept under cold storage during transport and accordingly energy required for transportation will be increased; and
(c) The resol-type phenolic resin has a short estimated period of service even under cold storage as explained above, and the transportation distance of the resin composition is limited. It is difficult to transport a resin composition domestically produced, for example, to overseas manufacturing plants and to use for production of resin pulleys.

The novolac-type phenolic resin is not self-reactive and there is no possibility of causing these problems. However, the resin has a nearly only weak point of low thermal shock resistance of hardened products. To improve the weak point and use the resin as a base resin for resin pulleys, various studies have been carried out.

The possible reason that hardened products of the novolac-type phenolic resin have lower thermal shock resistance than those of the resol-type phenolic resin is that the hardened novolac-type phenolic resin has a high density cross-linking structure or cross-linking density formed by hardening reaction and low flexibility as compared with the hardened resol-type phenolic resin. Thus, it is easily damaged by repetition of thermal stress by thermal expansion and contraction in connection with changes in the atmosphere temperature.

Therefore, it has been studied to add an elastomer and to adjust cross- linking density after hardening by adjusting a number average molecular weight of the novolac- type phenolic resin in order to impart higher flexibility to the hardened products of the novolac- type phenolic resin. However, a resin pulley composed of the hardened products for which flexibility is imparted by the above- mentioned method has low abrasion resistance. In particular, in a dusty atmosphere such as when automobiles assembled with the resin pulley travel on unpaved roads, a new problem is caused that the pulley is easily worn out by a cloud of dust.

That is, the elastic modulus of hardened products needs to be as low as possible in order to improve the thermal shock resistance of resin pulleys. On the other hand, the elastic modulus of hardened products needs to be as high as possible in order to improve abrasion resistance. Therefore, it can be said that material development to improve the contradictory properties is extremely difficult.

In an example of JP 2004-92688 A mentioned above, for example, a silica is added to the resol-type phenolic resin to improve abrasion resistance of resin pulleys. However, even if the silica is added to the novolac-type phenolic resin within the range of content ratio described in the patent publication to produce resin pulleys, both the high abrasion resistance And high thermal shock resistance like the resol-type phenolic resin cannot be obtained together.

Documents DATABASE WPI Week 200576 Derwent Publications Ltd., London, GB; AN 2005-737887 XP002444180 & JP 2005 282685 A as well as DATABASE WPI Week 199020 Derwent Publications Ltd., London, GB; AN 1990-150308 XP002444181 & JP 02 092628 A disclose a resin-made pulley, wherein a pulley main component is obtained by moulding phenol-resin composition containing novolac-type phenol resin as a resin base material, inorganic fiber, elastomer, silica powder, fluororesin powder and aluminum hydroxide or aluminum-silica powder.

DISCLOSURE OF THE INVENTION

An object of the present invention is to provide a resin pulley sufficiently practicable as an alternative product for a metal pulley by employing a novolac-type phenolic resin which is not self-reactive and needs no cold storage, superior in dimensional stability and strength and capable of improving contradictory properties of thermal shock resistance and abrasion resistance.

A resin pulley of the present invention is formed of a resin composition containing a novolac-type phenolic resin, a silica and an alumina having an average particle diameter of 5 μm or larger, and a content ratio of the alumina from 5 to 20 % by weight.

According to the present invention, in the resin composition containing the novolac-type phenolic resin as a base resin which is not self-reactive and needs no cold storage, the silica and the alumina are included. The silica is a main component of dust that wears out a resin pulley in a dusty atmosphere and is generally harder than the dust containing impurities. Therefore, the silica itself is difficult to be abraded and become an abrasion powder. On the contrary, the silica serves to crush and abrade dust with contact. And the alumina is much harder than the silica. Thus, abrasion resistance of the resin pulley formed of the foregoing resin composition can be dramatically improved.

In a resin pulley reinforced by a reinforcing fiber such as a glass fiber, for example, resin parts exposed between the reinforcing fibers are selectively abraded by a cloud of dust in a dusty atmosphere. Since the abrasion quickly develops, resistance to abrasion is low and the parts are worn out early. On the other hand, in a resin pulley formed of the resin composition containing the silica and the alumina of the present invention, the resin exposed between the reinforcing fibers is reinforced by the foregoing the silica and the alumina. Since selective abrasion is suppressed, it canbe assumedthat abrasion resistance is improved.

Therefore, according to the present invention, abrasion resistance of the resin pulley can be maintained at a high level with a combined use of the silica and the alumina. By adding an elastomer or adjusting the number average molecular weight of the novolac- type phenolic resin as described above, for example, it is possible to impart excellent thermal shock resistance to the resin pulley, that is, to achieve coexistence of contradictory properties of high abrasion resistance and high thermal shock resistance.

The same effect of the present invention cannot be obtained with the alumina only or the silica only. With only the silica, for example, abrasion resistance is poor since the alumina harder than the silica is not included and the effect of reinforcing the resin cannot be achieved sufficiently.

On the other hand, only with the alumina, compatibility and dispersibility of the alumina for hardened products of the novolac-type phenolic resin are low as compared with the silica. As the content ratio of the alumina is increased, the ratio of the alumina dropping off by colliding with a cloud of dust in a dusty atmosphere is increased. As a result, the abrasion resistance of the resin pulley is decreased on the contrary. When the content ratio is decreased to prevent the alumina from dropping of f, the effect by the alumina to reinforce the resin may not be sufficiently obtained. As a result, the abrasion resistance of the resin pulley is notwithstanding lowered.

In the resin pulley of the present invention, on the other hand, by setting the content ratio of the alumina from 5 to 20 % by weight as described above, the dropping off of the alumina is suppressed. By using the silica and the alumina together, the reinforcement effect by the alumina is covered by the silica. The resin exposed between reinforcing fibers, for example, can be reinforced firmly and abrasion resistance of the resin pulley can be improved.

In the present invention, the average particle diameter of the alumina is preferably 60 μm or smaller. The alumina having an average particle diameter within the foregoing range does not easily drop off from the surface of the resin pulley. Therefore, an effect of improving abrasion resistance of the resin pulley is superior. Furthermore, there is no possibility of lowering flowability of the resin composition inmolding. As a result, excellent resin pulleys can be produced without molding defects such as filling failures and gas burns. There is also no possibility of accelerating abrasion of the contact surface of a mold used for injection molding with the resin composition. Furthermore, a load to facilities can be reduced, and abrasion of the mold and screws and cylinders of a molding machine can be suppressed.

The silica is preferably spherical, and the average particle diameter of the spherical silica is preferably 10 to 30μm. The spherical silica having an average particle diameter within the foregoing range does not have the possibility of reducing flowability of the resin composition during-molding because the particle diameter is small and the surface is smooth due to the spherical shape. Accordingly, excellent resin pulleys can be produced, in particular, by injection molding without molding defects such as filling failures and gas burns. There is also no possibility of developing abrasion of the contact surface of a mold used for injection molding with the resin composition. In addition, it is difficult for the spherical silica to cause aggregation in the resin composition. The spherical silica is uniformly dispersed, and thus has a good effect of improving abrasion resistance of the resin pulleys.

The total content ratio of the silica and the alumina in the resin composition is preferably 30 to 50 % by weight. When the total ratio is less than the foregoing range, the effect by the silica and the alumina to reinforce the resin and to improve the abrasion resistance of the resin pulley may not be sufficiently achieved. On the other hand, when the total content ratio exceeds the foregoing range, the content ratio of the novolac-type phenolic resin becomes low on the whole. The flowability of the resin composition in molding is reduced and it may be difficult to produce excellent resin pulleys particularly by injection molding without molding defects such as filling failures of the resin composition and gas burns.

The resin composition preferably contains a reinforcing fiber. The content ratio of the reinforcing fiber is preferably 20 to 40 % by weight.

For the novolac-type phenolic resin, it is preferable to use in combination of a first novolac-type phenolic resin having a number average molecular weight $Mn_1$ of 850 or less and a second novolac-type phenolic resin having a number average molecular weight $Mn_2$ exceeding 850. The cross-linking density p' of a cross-linking structure is obtained by the following equation (1):

$$\rho' = E'/3\phi RT' \qquad (1)$$

where $\phi$ is a coefficient determined according to a formation state of the cross-linking structure formed by hardening reaction and is set to 1 herein, R represents a gas constant (= 8.3143J/K·mol) and T' represents a reference temperature (= Tg + 40°C) . Using the two kinds of the novolac-type phenolic resins with different number average molecular weights together, the cross-linking density p' is adjusted to 0.25 mol/cm$^3$ or less and flexibility is imparted to hardened products. As a result, it becomes possible to impart high thermal shock resistance to the resin pulley.

The content ratio of the novolac-type phenolic resin in the resin composition is preferably 20 to 40 % by weight. When the content ratio is less than the foregoing range, the flowability of the resin composition in molding is reduced, and it may be difficult to produce excellent resin pulleys, in particular, by injection molding without molding defects such as filling failures of the resin composition and gas burns.

Additionally, the amount of the hardened products of the novolac- type phenolic resin functioning as a binder is deficient in a resinpulleyaftermolding. Therefore, the ratio of, in particular, the alumina dropping off from the surface of the resin pulley is increased when a cloud of dust in a dusty atmosphere collides with the pulley. The alumina dropped off serves as an abrasive, to further accelerate abrasion of the surface of the resin pulley. As a result, the abrasion resistance of the resin pulley may be reduced.

On the other hand, when the content ratio of the novolac-type phenolic resin exceeds the foregoing range, the content ratio of the silica and the alumina relatively is reduced. Therefore, there is a possibility that a sufficient effect by the silica and the alumina to reinforce the resin and to improve the abrasion resistance of the resin pulley may not be obtained.

BRIEF DESCRIPTION OF THE DRAWINGS

FIG. 1 is a sectional view of an example of resin pulleys produced in examples in accordance with the present invention;

FIG. 2 is a graph showing the relationship between an average particle diameter of alumina and Taber abrasion loss for five kinds of resin pulleys produced in Example 1 in accordance with the present invention; and

FIG. 3 is a graph showing the relationship between a content ratio of the alumina and Taber abrasion loss for six kinds of resin pulleys produced in Example 2 in accordance with the present invention.

EMBODIMENTS

The resin pulley of the present invention is characterized by being formed of a resin composition containing a novolac-type phenolic resin, a silica and an alumina having an average particle diameter of 5 $\mu$m or larger, and a content ratio of the alumina is from 5 to 20 % by weight. The reason that the average particle diameter is limited to 5 $\mu$m or

larger in the present invention is that a minute alumina having an average particle diameter less than the foregoing range easily drops off from the surface of the resin pulley when a cloud of dust collides with the pulley in a dusty atmosphere to lower an effect of preventing abrasion by the dropping off of the alumina. The other reasons are that the alumina that drops off acts as an abrasive to accelerate the abrasion of the surface of the resin pulley, and that in cooperation with the dropping off of alumina, the abrasion resistance of the resin pulley is reduced.

The average particle diameter of alumina is preferably 60 $\mu$m or smaller. A larger alumina having an average particle diameter exceeding the foregoing range lowers flowability of the resin composition inmolding, whichmay cause difficulties to produce excellent resinpulleys, in particular, by injection molding without filling failures of the resin composition and gas burns. Further, there is a possibility of developing abrasion of the contact surface of a mold used for injection molding with the resin composition. Additionally, a load to facilities may be increased and the abrasion of the mold and screws and cylinders of a molding machine may be increased.

On the contrary, the alumina having an average particle diameter within the foregoing range has difficulties in dropping off from the surface of the resin pulley. Besides a good effect to improve abrasion resistance of the resin pulley, the flowability of the resin composition in molding may not be reduced. Therefore, excellent resin pulleys can be produced without molding defects such as filling failures and gas burns. Furthermore, the abrasion of the contact surface of a mold used for injection molding with the resin composition may not be accelerated. Still furthermore, a load to facilities can be reduced and the abrasion of the mold, and screws and cylinders of a molding machine can be suppressed. The average particle diameter of the alumina is preferably 5 to 40 $\mu$m in view of the balance of each property described above.

The reason that the content ratio of the alumina is limited to 5 to 20 % by weight relative to a total of the resin composition in the present invention is that when the content ratio is less than 5 % by weight, the effect by adding the alumina to reinforce the resin exposed on the surface of the resin pulley to improve resistance to abrasion cannot be obtained. When the ratio exceeds 20 % by weight, the ratio of the alumina dropping off from the surface of the resin pulley is increased when a cloud of dust collides the pulley in a dusty atmosphere. The alumina dropped off serves as an abrasive to accelerate further abrasion of the surface of the resin pulley. Accordingly, the resistance to abrasion of the resin pulley is rather reduced.

The alumina has a specific gravity that is about three times heavier than a novolac-type phenolic resin. When a large amount of the alumina exceeding the foregoing range is added, a problem is caused that an advantage of weight reduction by replacement with resin pulleys cannot be obtained. The content ratio of the alumina is preferably 7.5 to 10 % by weight in view of the balance of each property described above.

The silica in various shapes such as a spherical shape and indefinite shape can be used, and in particular, a spherical silica is preferable. The average particle diameter of the spherical silica is preferably 10 to 30 $\mu$m, and more preferably 15 to 25 $\mu$m.

An oversized spherical silica having an average particle diameter exceeding the foregoing range and an indefinite shaped silica lower flowability of the resin composition in molding, which may cause difficulties to produce excellent resin pulleys, in particular, by injection molding without molding defects such as filling failures of the resin composition and gas burns. Further, the abrasion of contact surface of a mold used for injection molding with the resin composition may be accelerated. The silica having a large particle diameter, the indefinite shaped silica, or a minute spherical silica having an average particle diameter less than the foregoing range easily cause aggregation in the resin composition. When the silica is aggregated and is not dispersed uniformly, the effect to reinforce the resin and to improve abrasion resistance of the resin pulley may be insufficient.

On the other hand, the spherical silica having an average particle diameter within the foregoing range has a small particle diameter and its surface is smooth due to the spherical shape. Thus, the flowability of the resin composition in molding cannot be reduced. As a result, excellent resinpulleys can be produced without molding defects such as the filling failures and gas burns. Further, there is no possibility of accelerating abrasion of the contact surface of the mold for injection molding with the resin composition. Furthermore, since the spherical silica does not aggregate easily in the resin composition and is dispersed uniformly, the effect of improving abrasion resistance of the resin pulley is also excellent.

The content ratio of the silica is preferably set in consideration of the content ratio of the alumina such that the total content ratio of the silica and the alumina is 30 to 50 % by weight, and particularly 35 to 45 % by weight relative to the total of the resin composition. When the total content ratio of the silica and the alumina is less than the range, the effect by the silica and the alumina to reinforce the resin and to improve abrasion resistance of the resin pulley may not be sufficiently obtained.

On the other hand, when the total content ratio of the silica and the alumina exceeds the range, the content ratio of the novolac-type phenolic resin is relatively reduced, and the flowability of the resin composition in molding is reduced. It may be difficult to produce excellent resin pulleys, in particular, by injection molding without molding defects such as filling failures of the resin composition and gas burns.

Furthermore, since the amount of hardened products of the novolac- type phenolic resin serving as a binder is deficient in a resin pulley after molding, the ratio, in particular, of the alumina dropping off from the surface of the resin pulley is increased when a cloud of dust collides with the pulley in a dusty atmosphere. At the same time, the alumina dropping off acts as an abrasive and accelerates further abrasion of the surface of the resin pulley. As a result, the resistance of abrasion of the resin pulley may be reduced.

For the novolac-type phenolic resin, it is preferable to use in combination of a first novolac-type phenolic resin having a number average molecular weight $Mn_1$ of 850 or less and a second novolac-type phenolic resin having a number average molecular weight $Mn_2$ exceeding 850. Using the two kinds of novolac-type phenolic resins having different number average molecular weights together, the cross-linking density of the cross-linking structure formed by hardening reaction is adjusted and the flexibility is imparted to the hardened products, which enables to impart high thermal shock resistance to the resin pulleys as described above.

That is, the second novolac-type phenolic resin having a number average molecular weight $Mn_2$ exceeding 850 has a longer chain length than the first novolac-type phenolic resin having a number average molecular weight $Mn_1$ of 850 or less. When the number of cross-linking points is the same, the possibility is high to increase a distance between adjacent cross-linking points, which functions so as to lower the cross-linking density of the hardened products.

Accordingly, usingthesecondnovolac- typephenolic resin with the first novolac- type phenolic resin and adjusting the weight ratio of both of the novolac- type phenolic resins can adjust the cross- linking density of hardened products at any range, improve the flexibility of the hardened products, and impart high resistance of thermal shock to the resinpulleys.

The first novolac-type phenolic resin having a number average molecular weight $Mn_1$ of 850 or less fuses and flows by the application of heat more easily than the second novolac-type phenolic resin having a number average molecular weight $Mn_2$ exceeding 850. Using the first novolac-type phenolic resin with the second novolac-type phenolic resin enables improvement of flowability of the resin composition inmolding. There is also an advantage that excellent resin pulleys can be produced without molding defects such as filling failures of the resin composition and gas burns.

In view of the adjustment of the cross-linking density of hardened products at any range, and the improvement in flexibility of the hardened product to improve the effect of providing high thermal shock resistance to the resin pulley using the second novolac-type phenolic resin in combination together, the first novolac-type phenolic resin preferably does not have an extremely short chain length and the number average molecular weight $Mn_1$ is preferably 750 or more even within the range as clear from the mechanism of adjusting the cross-linking density of the hardened products described above. For the first novolac-type phenolic resin, two or more kinds of novolac-type phenolic resins having a number average molecular weight $Mn_1$ of 850 or less may be combined.

In view of an improvement in flowability of the resin composition in molding and production of excellent resin pulleys without molding defects such as filling failures of the resin composition and gas burns using the first novolac-type phenolic resin in combination together, the second novolac-type phenolic resin preferably does not have an extremely large molecular weight and the number average molecular weight $Mn_2$ is preferably 1,150 or less, and more preferably 1,050 to 1,150 even within the range. For the second novolac-type phenolic resin, two or more kinds of novolac-type phenolic resins having a number average molecular weight $Mn_2$ exceeding 850 may be combined.

The first and second novolac-type phenolic resins can be mixed at any ratio. When a resin whose number average molecular weight $Mn_2$ is relatively small even in the foregoing range so that its chain length is short so that the effect of lowering cross-linking density is small is used as the second novolac-type phenolic resin, for example, the ratio is preferably set to be relatively large. On the contrary, when a resin whose number average molecular weight $Mn_2$ is relatively large in the range so that the chain length is long and the effect of lowering cross-linking density is significant is used as the second novolac-type phenolic resin, the ratio is preferably set to be relatively small.

More specifically, when a first novolac-type phenolic resin $P_1$ having a number average molecular weight $Mn_1$ of 750 to 850 and a second novolac-type phenolic resin $P_2$ having a number average molecular weight $Mn_2$ of 950 or more but less than 1,050 are combined, for example, a weight ratio $P_1/P_2$ of both preferably ranges from 35/ 65 to 65/35, and more preferably from 45/55 to 55/45.

When a first novolac-type phenolic resin $P_1$ having a number average molecular weight $Mn_1$ of 750 to 850 and a second novolac-type phenolic resin $P_2$ having a number average molecular weight $Mn_2$ of 1, 050 to 1,150 are combined, a weight ratio $P_1/P_2$ of both preferably ranges from 40/60 to 70/30, and more preferably from 50/50 to 60/40.

By setting the weight ratio of the first and second novolac-type phenolic resins within the foregoing ranges, a cross-linking density of hardened products formed by hardening both of the novolac-type phenolic resins is preferably adjusted to $0.25$ mol/cm$^3$ or less if expressed in the number of moles at cross-linking points contained within the unit volume of only the resin content in the hardenedproducts, thereby enabling to impart high thermal shock resistance to the resin pulley.

In the present specification, based on a result of measuring a glass transition temperature Tg (°C) and a storage modulus E' (MPa) of hardened products obtained by hardening a measuring sample composition containing a resin content of a novolac-type phenolic resin and a hardening agent but not containing other components such as silica, alumina and reinforcing fibers, the cross-linking density p' (mol/cm$^3$) is expressed by a value obtained by the equation (1):

$$\rho' = E'/3\phi RT' \qquad (1)$$

where $\phi$ is a coefficient determined according to a formation state of the cross-linking structure formed by hardening reaction and is set to 1 herein, R represents a gas constant (= 8.3143J/K·mol) and T' represents a reference temperature (= Tg + 40°C).

The content ratio of the novolac-type phenolic resin (the total content ratio when the foregoing first and second novolac-type phenolic resins are combined) is preferably 20 to 40 % by weight, and more preferably 25 to 35 % by weight relative to the total of the resin composition. When the content ratio of the novolac-type phenolic resin is less than the range, flowability of the resin composition in molding is reduced and thus it may be difficult to produce excellent resin pulleys, in particular, by injection molding without molding defects such as filling failures of the resin composition and gas burns.

. In addition, the amount of hardened products of the novolac-type phenolic resin serving as a binder is deficient in a resin pulley after molding. When a cloud of dust collides with the pulley in a dusty atmosphere, the ratio, in particular, of the alumina dropping off from the surface of the resin pulley is increased. At the same time, the alumina dropped off acts as an abrasive may accelerate the abrasion of the surface of the resin pulley, which may possibly lower the abrasion resistance of the resin pulley.

On the other hand, when the content ratio of the novolac-type phenolic resin exceeds the foregoing range, the content ratio of the silica and the alumina is relatively reduced. As a result, the effect by the silica and the alumina of reinforcing the resin and improving abrasion resistance of the resin pulley may not sufficiently achieved.

Since the novolac-type phenolic resin is not self-reactive as described above, a hardening agent for hardening-reaction after injection molding is added into a resin composition. Various hardening agents capable of hardening-reaction to the novolac-type phenolic resin can be used, and in particular, hexamethylenetetramine is preferable. The ratio of the hardening agent is preferably'12 to 20 parts by weight relative to 100 parts by weight of the total of the novolac-type phenolic resin.

A reinforcing fiber, a lubricant, an elastomer, etc., can be included in the resin composition. Inorganic or organic various reinforcing fibers can be used, and particularly an inorganic fiber is preferable. The inorganic fiber includes a glass fiber, a boron fiber, a carbon fiber, a silicon carbide fiber, an alumina fiber, an inorganic whisker, etc. In particular, the glass fiber is preferable due to not only ease in production, availability, and cost effectiveness, but also a superior reinforcement effect. The glass fiber is preferably about 6 to 20 $\mu$m in its average fiber diameter and about 1 to 6 mm in its average fiber length. A chopped strand which is often used for reinforcement of the novolac-type phenolic resin is preferable.

The content ratio of the reinforcing fiber is preferably 20 to 40 % by weight, and more preferably 20 to 30 % by weight relative to the total of the resin composition. When the content ratio is less than the range, the reinforcement effect by containing the reinforcing fiber, or the effect of improving dimensional stability and strength of a resin pulley may not be obtained. When the content ratio exceeds the range, belt attacking property to damage a counterpart of the resin pulley such as a belt may become stronger.

As a lubricant, a fluororesin powder superior in lubricity such as, for example, a polytetrafluoroethylene (PTFE) powder is preferable. The fluororesin powder as a lubricant is preferably 10 $\mu$m or smaller in its average particle diameter. The fine fluororesin powder having an average particle diameter of 10 $\mu$m or smaller can be dispersed uniformly on the surface of a resin pulley. As a result, only adding a slight amount of fluororesin powder can impart satisfactory slip property to the surface of the resin pulley. It is more preferable that the average particle diameter of the fluororesin powder is smaller. However, if it is extremely small, dispersibility is reduced on the contrary. Thus, aggregation is easily caused and the powder may not be dispersed uniformly on the surface of the resin pulley. Accordingly, an excellent slip property cannot be imparted on the surface of the resin pulley. Therefore, the average particle diameter of the fluororesin powder is preferably 1 $\mu$m or larger.

The content ratio of the lubricants such as the fluororesin powder is preferably 0.5 to 5 % by weight, and more preferably 0.5 to 3 % by weight relative to the total of the resin composition. When the content ratio of the lubricants is less than the range, the effect by containing the lubricants for imparting satisfactory slip property on the surface of a resin pulley may not be obtained. When the ratio exceeds the range, thermal resistance of the resin pulley may be reduced since most of the lubricants are fluororesin powder with lower thermal resistance than hardened products of the novolac-type phenolic resin.

The resin composition for forming the resin pulley of the present invention may be added with various additives such as a coloring agent like pigment and a mold releasing agent for facilitating to release a resin pulley after molding from a mold within a well-known range of the content ratio, besides each component described above.

The resin pulley of the present invention can be produced by heating and melting a resin composition containing each of the aforesaid components within a cylinder of an injection molding machine, thereafter injecting the molted composition into a mold cavity of a mold corresponding to a shape of the pulley. The mold is preheated at not less than a hardening temperature of the novolac-type phenolic resin. Then the novolac-type phenolic resin is subjected to hardening-reaction to produce the pulley. When the resin pulley is provided with a metal insertion member (for example, a bearing) as described above, the resin pulley integrated with the insertion member can be produced in the same manner by injecting the resin composition into the mold cavity and subjecting the novolac-type phenolic resin to hardening-reaction, while the insertion member is held by a holding portion provided in the mold cavity of the mold.

For the mold used for injection molding, a gate for injecting the resin composition melted within the cylinder into the mold cavity is preferably a film gate (in particular, a film gate extending over the circumference of the pulley) or a ring gate. Employing the mold with the foregoing film gate and the like can produce excellent resin pulleys without molding defects such as filling failures and weld lines of the resin composition using a low flowability resin composition containing a large amount of a silica, an alumina, a reinforcing fiber, etc. as described above.

EXAMPLES

<Example 1>

Each component shown in Table 1 was mixed by a Henschel mixer, kneaded by a thermal roll heated at 85°C, sheeted and thereafter ground to prepare a resin composition.

Table 1

| Component | Parts by Weight |
|---|---|
| First novolac-type phenolic resin (number average molecular weight $Mn_1 = 800$) | 16.5 |
| Second novolac-type phenolic resin (number average molecular weight $Mn_2 = 1100$) | 13.5 |
| Alumina | 10.0 |
| Spherical silica (average particle diameter of 20 $\mu$m) | 29.0 |
| Glass fiber (average fiber diameter of 10 $\mu$m, average fiber length of 250 $\mu$m) | 20.0 |
| Fluororesin powder [*1] (average particle diameter of 10 $\mu$m) | 2.0 |
| Pigment, mold releasing agent, and the others | 9.0 |
| *1: POLYFLON™ L-2, manufactured by Daikin Industries, Ltd. | |

Five kinds of alumina having an average particle diameter of 1.5 $\mu$m, 4 $\mu$m, 5.9 $\mu$m, 35 $\mu$m and 60 $\mu$m were used individually. The average particle diameters of silica and alumina were measured by a laser diffraction method with the use of a laser diffraction/scattering particle size distribution analyzer (LA-920, manufactured by Horiba, Ltd.).

Number average molecular weights of the first and second novolac-type phenolic resins were measured by a high-speed liquid chromatograph (HLC-802A, manufactured by Tosoh Corporation) loaded with TSK-Gel column G3000H8 (x 1), G2000H8 (x 2) and G1000H8 (x 1), each manufactured by Tosoh Corporation.

The weight ratio $P_1/P_2$ of the first novolac-type phenolic resin $P_1$ and the second novolac-type phenolic resin $P_2$ was 55/45. Based on the results of measuring glass transition temperature Tg (°C) and storage modulus E' (MPa) of hardened products formed by hardening a measuring sample composition containing resin contents of two kinds of the novolac-type phenolic resins and a hardening agent but not containing other components such as a silica, an alumina and a reinforcing fiber, the cross-linking density p' obtained by the equation (1) described above was 0.24 mol/cm$^3$.

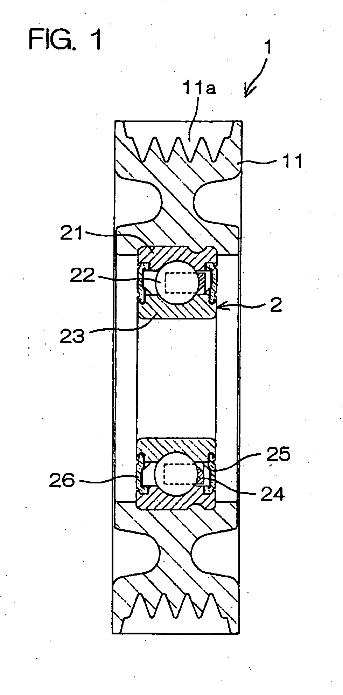

Subsequently, a mold having a film gate continuing over the entire circumstance was prepared that has a cavity corresponding to the shape of the pulley body 11 of the resin pulley 1 shown in Fig. 1 and provided with a holding portion for holding the outer ring 21 of the ball bearing 2 at a position corresponding to the center of the pulley body 11 of the cavity. The mold was set in an injection molding machine and was heated at 170°C, and the resin composition was supplied to a hopper of the injection molding machine.

The ball bearing 2 formed with the outer ring 21, a ball 22, an inner ring 23, a holder 24 and seals 25 and 26 was set to the holding portion of the mold and clamped. In this state, the resin composition softened in a cylinder was injected into the cavity to fill in the mold cavity and then hardened. The pulley body 11 with a groove 11a on the outer circumferential surface was molded to produce the resin pulley 1.

<Abrasion Resistance Test>

Abrasion resistance for the five kinds of resin pulleys with different average particle diameters of alumina produced in Example 1 were evaluated based on Taber abrasion loss ($mm^3$) which was measured by Japanese Industrial Standards (JIS) K7204:1999 "Plastics - Determination of resistance to wear by abrasive wheels".

<Thermal Shock Resistance Test>

To evaluate thermal shock resistance for the five kinds of resinpulleys with different averageparticle diameters of alumina produced in Example 1, the process of cooling the resin pulleys at -40°C for 30 minutes and heating them at 120°C for 30 minutes was regarded as one cycle, and the process was repeated for 2,000 cycles. After that, the pulley bodies were observed for whether cracks were generated. The pulley body without any cracks was evaluated as Excellent. The pulley body with a few cracks but practically permissive was evaluated as Good. The pulley body with many cracks was evaluated as Bad.

<Moldability Test>

The five kinds of resin pulleys with different average particle diameters of alumina produced in Example 1 were observed whether molding defects such as filling failures and gas burns were caused in pulley bodies after molding. The pulley body without any molding defects was evaluated as Excellent. The pulley body in which a few molding defects were detected but practically permissive was evaluated as Good. The pulley body unusable due to molding defects was evaluated as Bad.

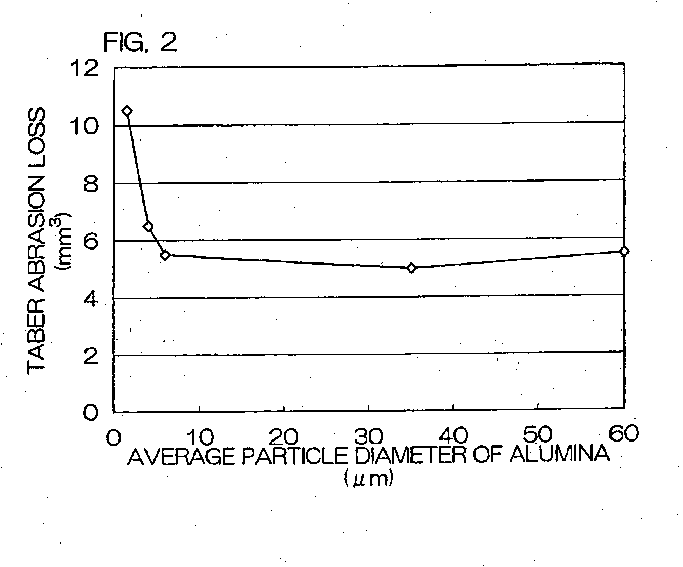

The results of the abrasion resistance test are shown in FIG. 2 and Table 2, and the results of the thermal shock resistance test and the moldability test are shown in Table 2.

Table 2

| | Average particle diameter of alumina ($\mu$m) | Taber abrasion loss ($mm^3$) | Thermal shock resistance | Moldability |
|---|---|---|---|---|
| | 1.5 | 10.5 | Excellent | Excellent |
| | 4 | 6.5 | Excellent | Excellent |
| Example 1 | 5.9 | 5.5 | Excellent | Excellent |
| | 35 | 5 | Excellent | Excellent |
| | 60 | 5.5 | Excellent | Good |

From Table 2, the results confirm that the five kinds of resin pulleys 1 were superior in thermal shock resistance since the cross-linking density was set to 0.25 $mol/cm^3$ or less by combining two kinds of novolac-type phenolic resins as a base resin.

From Table 2 and FIG. 2, the results confirm that the resin pulleys containing alumina having an average particle diameter of 5 $\mu$m or larger out of the five kinds of resin pulleys 1 were also superior in abrasion resistance since the Taber abrasion loss was small compared with the resin pulleys containing alumina having an average particle diameter less than the range. The results also confirm that the average particle diameter of alumina needs to be 5 $\mu$m or larger.

In addition, the results from Table 2 confirm that the resin pulleys containing alumina having an average particle diameter of 60 $\mu$m or smaller were all superior in moldability. The result confirms that the averageparticle diameter of alumina is preferably 60 $\mu$m or smaller.

<Example 2>

Six kinds of resin pulleys with different content ratios of alumina were produced in the same manner as Example 1 except that a content ratio of alumina with the average particular diameter of 5.9 $\mu$m was set to 0 % by weight, 5 % by weight, 7.5 % by weight, 10 % by weight, 20 % by weight and 39 % by weight, and that a content ratio of silica was adjusted such that a total content ratio of silica and alumina became 39 % by weight. The abrasion resistance test and the thermal shock resistance test of the resin pulleys were carried out and their properties were evaluated.

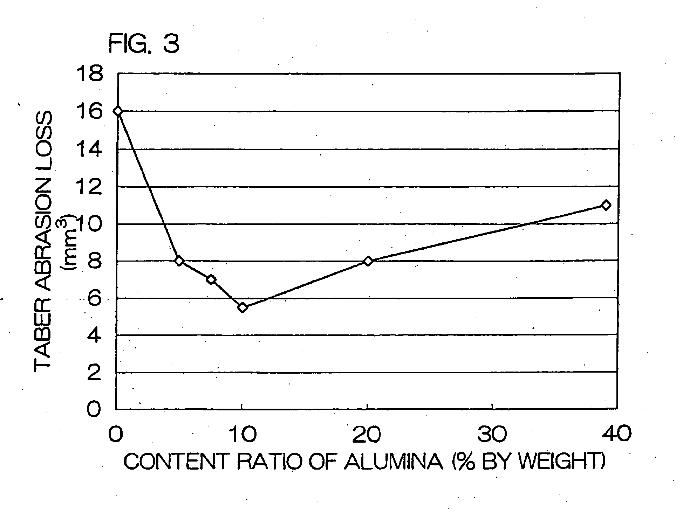

The results of the abrasion resistance test are shown in FIG. 3 and Table 3, and the results of the thermal shock resistance test are shown in Table 3.

Table 3

| | Content ratio of alumina (% by weight) | Taber abrasion loss (mm$^3$) | Thermal shock resistance |
|---|---|---|---|
| Example 2 | 0 | 16 | Excellent |
| | 5 | 8 | Excellent |
| | 7.5 | 7 | Excellent |
| | 10 | 5.5 | Excellent |
| | 20 | 8 | Excellent |
| | 39 | 11 | Excellent |

The results confirm from Table 3 that the six kinds of resin pulleys 1 were all superior in thermal shock resistance since cross-linking density was set to 0.25 mol/cm$^3$ or less by combining two kinds of novolac-type phenolic resins as a base resin.

The results confirm from Table 3 and FIG. 3 that the resin pulleys containing alumina having an average particle diameter of 5 $\mu$m or larger at a content ratio of 5 to 20 % by weight out of the five kinds of resin pulleys 1 were also superior in abrasion resistance since the Taber abrasion loss was small, compared with resin pulleys containing the foregoing alumina whose content ratio was less than 5 % by weight and exceeding 20 % by weight. The result confirms that a content ratio of alumina having an average particle diameter of 5 $\mu$m or larger needs to be 5 to 20 % by weight.

The disclosure of Japanese Patent Application No.2006-144475 filed on May 24, 2006 is incorporated herein by reference.

## Claims

1. A resin pulley formed of a resin composition containing a novolac-type phenolic resin, a silica and an alumina having an average particle diameter of 5 $\mu$m or larger, and a content ratio of the alumina from 5 to 20 % by weight.

2. The resin pulley according to claim 1, wherein the average particle diameter of the alumina is 60 $\mu$m or smaller.

3. The resin pulley according to claim 1, wherein the silica is a spherical silica.

4. The resin pulley according to claim 3, wherein the spherical silica has an average particle diameter of 10 to 30 $\mu$m.

5. The resin pulley according to any of claims 1-4, wherein a total content ratio of the silica and the alumina in the resin composition is 30 to 50 % by weight.

6. The resin pulley according to any of claims 1-5, wherein the resin composition further contains a reinforcing fiber.

7. The resin pulley according to claim 6, wherein a content ratio of the reinforcing fiber in the resin composition is 20 to 40 % by weight.

8. The resin pulley according to any of claims 1-7, wherein a first novolac-type phenolic resin having a number average molecular weight $Mn_1$ of 850 or less and a second novolac-type phenolic resin having a number average molecular weight $Mn_2$ exceeding 850 are combined as the novolac-type phenolic resin.

9. The resin pulley according to claim 8, wherein cross-linking density p' of the novolac-type phenolic resin obtained by the following equation (1) is 0.25 mol/cm$^3$ or less:

$$\rho' = E'/3\phi RT' \qquad (1)$$

where $\phi$ is a coefficient determined according to a formation state of a cross-linking structure formed by hardening reaction and is set to 1 herein, R represents a gas constant (= 8.3143J/K·mol) and T' represents a reference temperature (= Tg + 40°C).

10. The resin pulley according to any of claims 1-9, wherein a content ratio of the novolac-type phenolic resin in the resin composition is 20 to 40 % by weight.


**Patentansprüche**

1. Harz-Rolle, die aus einer Harzzusammensetzung gebildet ist, die ein Phenolharz vom Novolak-Typ, ein Siliciumoxid und ein Aluminiumoxid enthält, und zwar mit einem mittleren Partikeldurchmesser von 5 $\mu$m oder größer, wobei ein Anteilsverhältnis des Aluminiumoxids im Bereich von 5 Gew.-% bis 20 Gew.-% liegt.

2. Harz-Rolle nach Anspruch 1, wobei der mittlere Partikeldurchmesser des Aluminiumoxids 60 $\mu$m oder kleiner ist.

3. Harz-Rolle nach Anspruch 1, wobei das Siliciumoxid ein sphärisches Siliciumoxid ist.

4. Harz-Rolle nach Anspruch 3, wobei das sphärische Siliciumoxid einen mittleren Partikeldurchmesser im Bereich von 10 $\mu$m bis 30 $\mu$m aufweist.

5. Harz-Rolle nach einem der Ansprüche 1-4, wobei das gesamte Anteilsverhältnis des Siliciumoxids und des Aluminiumoxids in der Harzzusammensetzung im Bereich von 30 Gew.-% bis 50 Gew.-% liegt.

6. Harz-Rolle nach einem der Ansprüche 1-5, wobei die Harzzusammensetzung ferner eine verstärkende Faser aufweist.

7. Harz-Rolle nach Anspruch 6, wobei das Anteilsverhältnis der verstärkenden Faser in der Harzzusammensetzung im Bereich von 20 Gew.-% bis 40 Gew.-% liegt.

8. Harz-Rolle nach einem der Ansprüche 1-7, wobei ein erstes Phenolharz vom Novolak-Typ mit einer mittleren Molekulargewichtszahl $Mn_1$ von 850 oder weniger und ein zweites Phenolharz vom Novolak-Typ mit einer mittleren Molekulargewichtszahl $Mn_2$ von mehr als 850 als das Phenolharz vom Novolak-Typ miteinander kombiniert werden.

9. Harz-Rolle nach Anspruch 8, wobei die Vernetzungsdichte p' des Phenolharzes vom Novolak-Typ, die durch die folgende Formel (1) erhalten wird, 0,25 mol/cm$^3$ oder weniger beträgt:

$$\rho' = E'/3\phi RT' \qquad (1),$$

wobei $\phi$ ein Koeffizient ist, der gemäß einem Formationszustand einer Vernetzungsstruktur bestimmt ist, und zwar gebildet durch eine Aushärtungsreaktion, und vorliegend auf 1 gesetzt ist, wobei R eine Gaskonstante (= 8,3143J/K·mol) darstellt und wobei T' eine Referenztemperatur (= Tg + 40 °C) darstellt.

10. Harz-Rolle nach einem der Ansprüche 1 bis 9, wobei ein Anteilsverhältnis des Phenolharzes vom Novolak-Typ in der Harzzusammensetzung im Bereich von 20 Ges.-% bis 40 Gew.-% liegt.


**Revendications**

1. Poulie en résine constituée d'une composition de résine contenant une résine phénolique de type novolaque, une silice et une alumine ayant un diamètre moyen de particules de 5 $\mu$m ou plus, la proportion de l'alumine étant de 5 à 20 % en poids.

2. Poulie en résine selon la revendication 1, dans laquelle le diamètre moyen de particules de l'alumine est de 60 $\mu$m ou moins.

3. Poulie en résine selon la revendication 1, dans laquelle la silice est une silice sphérique.

**4.** Poulie en résine selon la revendication 3, dans laquelle la silice sphérique a un diamètre moyen de particules de 10 à 30 $\mu$m.

**5.** Poulie en résine selon l'une quelconque des revendications 1 à 4, la proportion totale de la silice et de l'alumine dans la composition de résine étant de 30 à 50 % en poids.

**6.** Poulie en résine selon l'une quelconque des revendications 1 à 5, dans laquelle la composition de résine contient en outre une fibre de renforcement.

**7.** Poulie en résine selon la revendication 6, la proportion de la fibre de renforcement dans la composition de résine étant de 20 à 40 % en poids.

**8.** Poulie en résine selon l'une quelconque des revendications 1 à 7, dans laquelle une première résine phénolique de type novolaque ayant un poids moléculaire moyen en nombre $Mn_1$ de 850 ou moins et une deuxième résine phénolique de type novolaque ayant un poids moléculaire moyen en nombre $Mn_2$ dépassant 850 sont combinées comme résine phénolique de type novolaque.

**9.** Poulie en résine selon la revendication 8, dans laquelle la densité de réticulation p' de la résine phénolique de type novolaque obtenue par l'équation (1) suivante est de 0,25 mol/cm$^3$ ou moins :

$$\rho' = E'/3\phi RT' \qquad (1)$$

où p' est un coefficient déterminé en fonction d'un état de formation d'une structure de réticulation formée par une réaction de durcissement et est fixé ici à 1, R représente une constante gazeuse (= 8,3143 J/kg·mol), et T représente une température de référence (= Tg + 40°C).

**10.** Poulie en résine selon l'une quelconque des revendications 1 à 9, la proportion de la résine phénolique de type novolaque dans la composition de résine étant de 20 à 40 % en poids.

FIG. 1

FIG. 2

FIG. 3

**EP 1 860 144 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002212388 A
- JP 2004092688 A
- JP 2005282685 A
- JP 2092628 A
- JP 2006144475 A

**Non-patent literature cited in the description**

- DATABASE WPI. 2005-737887
- DATABASE WPI. 1990-150308